# EUROPEAN PATENT APPLICATION

(11) **EP 0 617 413 A2**
(43) Date of publication of application: **28.09.1994**
(21) Application number: 94302074.3
(22) Date of filing: 23.03.1994
(51) Int. Cl.: G11B 5/60, G11B 5/187

(54) **Magnetic head sliders and a process for producing the same**

(30) Priority: 26.03.1993 JP 68361/93
(71) Applicant: NGK INSULATORS, LTD., Nagoya City Aichi Pref. (JP)
(72) Inventor: Suzuki, Tomio, Yokkaichi City, Mie Pref. (JP)
(74) Representative: Paget, Hugh Charles Edward

(57) **Abstract**

A magnetic head slider includes a track portion which is constituted by a flat surface (5) to be opposed to a recording medium and two track side surfaces (12) each having a concave conical peripheral shape and defining the width of the track as viewed on the above flat surface. A process is also disclosed for producing such a magnetic head slider by using a grinding stone having a conical or frusto-conical shape at a peripheral side and rotated, so that the track side surfaces each having a conical or frusto-conical peripheral shape and defining the width of the track as viewed on the above flat surface are formed.

## Description

### BACKGROUND OF THE INVENTION

### (1) Field of the Invention:

The present invention relates to magnetic head sliders to be used for recording information on recording media and reading out it from the recording media. The present invention also relates to a process for producing such magnetic head sliders.

### (2) Related Art Statement:

Heretofore, magnetic head sliders have been used to record information on recording media such as hard discs and to read out information from such recording media. Fig. 5 illustrates the construction of an example of the conventional monolithic magnetic head sliders of a center rail type. In Fig. 5, a magnetic head slider 51 includes air bearing surfaces (ABS) 53-1 and 53-2 provided on opposite side portions of a slider body 52, and a center rail 56 in a central portion of the slider body 52. The center rail 56 is constituted by a yoke portion 54 around which a coil is to be wounded, and a track 55 involving a magnetic gap having a given width and a given depth. Leading ramps 57-1 and 57-2 are provided in the form of inclined surfaces at end portions of the air bearing surfaces 53-1 and 53-2, respectively, on a side from which air is introduced. On the other hand, a trailing ramp 58 is provided in the form of an inclined surface at an end of the center rail 56 on an air outlet side.

In order to produce the conventional magnetic head slider 51 having the above construction, a yoke portion 50 is bonded to a slider body 52 made of a magnetic material such as ferrite. Then, the slider body 52 and the yoke portion 50 are roughly machined to form the air bearing surfaces 53-1 and 53-2, and the center rail 56 is formed as shown in Fig. 5 by a dotted line. After the above rough machining, beveled portions 59-1 through 59-4 are formed by beveling edges of the air bearing surfaces 53-1 and 53-2, and to finally define the air bearing surfaces (ABS) through fine grinding. On the other hand, the width of the track is determined by beveling (fine grinding) edge portions of the center rail 56. Thereby, the magnetic head slider 51 having a given final shape with a given track width "d" is obtained.

### SUMMARY OF THE INVENTION

Since the information is recorded or read out by means of the track 55 in the magnetic head slider 51, it is necessary, in the production of the magnetic head slider, to work, with a high accuracy, the depth "d" of the track 55 and the depth of the track from a plane surface of the track at which the track is opposed to the recording medium. For this purpose, according to the conventional magnetic head sliders 51, the slider body 52 and the yoke portion machined from one end to the other through fine grinding with a diamond grinding stone rotating at a high speed, while the diamond grinding stone is completely passed from one end to the other end of the slider body 52. Therefore, this process has the problem in that the working time is long and the service life of the grinding stone is short.

The present invention is to solve the above-mentioned problem, and to provide magnetic head sliders and a process for the production of the same, which can shorten the working time and prolong the service life of the grinding stone.

The magnetic head slider according to the present invention is characterized in that a track portion is constituted by a flat surface to be opposed to a recording medium and two track side surfaces of the track each having a concave conical peripheral surface and defining the width of the track as viewed on the above flat surface.

The magnetic head slider-producing process according to the present invention is characterized in that two track side surfaces are formed by descending, relative to a core portion of the magnetic head slider, a grinding stone having a downwardly throttled conical shape at a peripheral side while being rotated such that the track side surfaces may be formed to each have a (concave) conical peripheral shape and define the width of the track as viewed on the above flat surface.

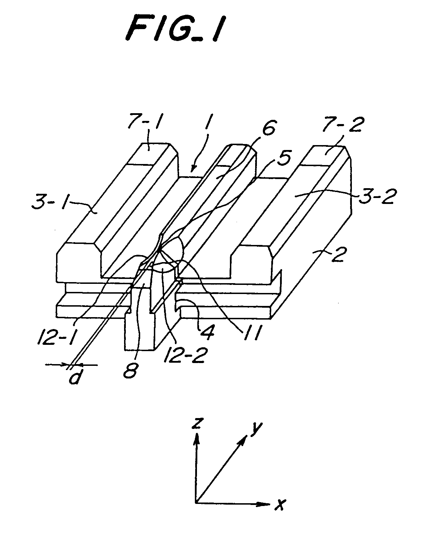

In the above construction, since the track portion of the magnetic head slider is constituted by the flat surface to be opposed to a recording medium and two track side surfaces each having a concave conical peripheral shape and defining the width of the track as viewed on the above flat surface, the track portion can be formed by grinding a coarsely ground central rail portion including the magnetic gap with the grinding stone having a conical peripheral side face under rotating. Accordingly, the working time can be shortened, and the service life of the grinding stone can be prolonged. According to the present invention, the width of the track is not defined by a trapezoidal parallelogram shape as in the conventional technique, but a part of the track portion which defines the width thereof is constituted by two track side surfaces each having a concave conical peripheral shape. As is understood from Fig. 1, the magnetic flux is concentrated with respect to the magnetic gap in all directions as viewed in x-, y- and z-directions. Therefore, the recording efficiency can be improved as compared with the conventional magnetic head sliders.

The following are considered as preferred embodiments of the present invention.
(1) The two track side surfaces defining the width of the track portion as viewed on the above flat surface thereof are symmetrical with respect to a plane vertically passing a center line of a center rail of the magnetic head slider.
(2) A line drawn on the conical peripheral surface of each of the track side faces of the track defining the width of the track portion as viewed on the flat surface thereof portion and passing a vertex of a conical shape constituting the conical peripheral surface forms an angle of 30°-80° between a center line of the conical shape.
(3) In the magnetic head sliding-producing process, a grinding stone is used, which has a conical shape at at least a lower portion having a conical peripheral surface of corresponding to that of an intended track side face of the track defining the width of the track as viewed on the track portion, and the conical peripheral surface of the grinding stone forms an angle of 30°-80° between a center line of the conical shape.

These and other optional features and advantages of the invention will be appreciated upon reading the following description of the invention when taken in conjunction with the attached drawings.

### BRIEF DESCRIPTION OF THE ATTACHED DRAWINGS

For a better understanding of the invention, reference is made to the attached drawings, wherein:
Fig. 1 is a perspective view for illustrating an embodiment of a magnetic head slider according to the present invention;
Figs. 2(a) through Fig. 2(c) are perspective views for illustrating producing steps of an example of a magnetic head slider-producing process according to the present invention;
Figs. 3(a) and Fig. 3(b) are a sectional view and a side view for illustrating a grinding stone;
Fig. 4 is a side view of another grinding stone to be used in the invention producing process; and
Fig. 5 is a schematic view for illustrating an example of the conventional magnetic head sliders.

### DETAILED DESCRIPTION OF THE INVENTION

Fig. 1 is a perspective view for illustrating the construction of the magnetic head slider according to the present invention. In Fig. 1 is shown a monolithic magnetic head slider 1 of a center rail type, which includes a slider body 2 made of a magnetic material such as ferrite and provided with air bearing surfaces (ABS) 3-1 and 3-2 on opposite sides thereof, a yoke portion 4 connected to one end of the slider body, and a center rail 6 located in a central portion of the magnetic head slider. The center rail 6 extends over the slider body 2 and the yoke portion 4 and includes a track with a magnetic gap having a given width "d" and a given depth between the yoke portion and the slider body. Leading ramp portions 7-1 and 7-2 are provided in the form of inclined surfaces on upper surfaces of the air bearing surfaces 3-1 and 3-2, respectively, on an air-inlet side. On the other hand, a trailing ramp portion 8 is provided in the form of an inclined surface on the upper face of the center rail 6.

The above constituent parts are the same as those explained in connection with the prior art. What is important for the magnetic head slider 1 according to the present invention is that the track 5 is constituted by a flat surface 11 to be opposed to a recording medium such as a hard disc and two track side surfaces 12-1 and 12-2 each constituted by a part of a conical peripheral surface and defining the width of the track 5. That is, the width "d" of the track 5 on the center rail 6 including the magnetic gap is defined between the two track side surfaces 12-1 and 12-2 each constituted by a part of the conical peripheral surface as measured on the upper flat surface of the central rail 6. The depth of the track 5 is defined by a half of an open angle of a vertex of the conical peripheral surface constituting the track side surface.

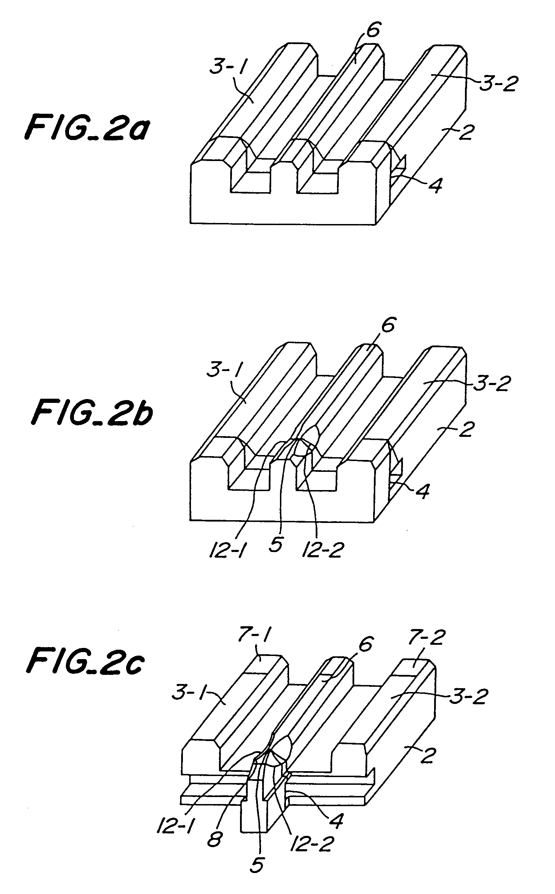

In Figs. 2(a) through 2(c) are schematical views for illustrating steps of an example of the magnetic head slider-producing process according to the present invention. In the following will be explained the process for producing a monolithic magnetic head 1 of a center rail type according to the present invention with reference to Figs. 2(a) through Fig. 2(c). First, as shown in Fig. 2(a), a yoke portion-forming part is bonded to a slider body 2. Both the yoke portion-forming part and the slides body are made of a magnetic material such as ferrite, and air bearing surfaces 3-1 and 3-2 are formed and finished by working on the slider body 2 and the yoke portion-forming part, and a center rail 6 is also formed with a width of, for example, 0.1 mm.

For this step, for example, a diamond grinding stone may be utilized to effect machining work. However, the air bearing surfaces and the center rail are preferably formed by using a chemical etching process disclosed in non-examined Japanese patent application publication No. 64-15,380 in the case that a single crustal is employed for the matrial. That is, a mask is formed on a surface of a single crystal, which mask is to give a pattern for the formation of floating surfaces and a center rail, while inner upper edges of the air bearing surfaces and opposite upper edges of the central rail are involved in respective planes (100) or (100) planes perpendicular to the surface of the single crystal, and the masked surface of the single crystal is chemically etched by bringing it into contact with an aqueous solution containing at least 20 wt% of phosphoric acid. Thereby, the air bearing surfaces and the center rail are formed through the provision of the etched recesses with the inclined upper edge portions. When this technique is employed, the center track 6 as well as the air bearing surfaces 3-1 and 3-2 are formed at their respective dimensions and heights, while inclined upper faces are formed on the upper edge portions of thereof. Thereby, the edge portions of the center track and those of the air bearing surfaces are prevented from being broken during use of the slider, so that a head is prevented from being crushed with a broken piece.

Next, as shown in Fig. 2(b), in order to adjusting the width of a magnetic gap in the center track 6 to a desired width of a track 5, the track portion is worked through the provision of track side surfaces 12-1 and 12-2. A grinding stone to be used has, for example, an outer diameter of 50.5 mm, a grain size of not more than 10 µm, and is preferably rotated at the number of revolutions of 25,000 rpm, while a descending speed is set at 2 mm/min. The track portion is ground under the above conditions. A rotating shaft of the grinding stone is set in parallel to the flat surface of the track 5 of the slider to be opposed to the recording medium, and a cutting depth, that is, a descending distance, of the grinding stone is set at 80 µm (It was confirmed that when the track portion was actually worked under the above conditions, the opposite side surfaces of the track were not chipped at all. Further, a time required for working was 12 seconds per one track, which was about 1/2 of about 30 second required in the conventional machining).

Thereafter, as shown in Fig. 2(c), leading ramps 7-1 and 7-2 are formed in the form of inclined surfaces on the air bearing surfaces 3-1 and 3-2, respectively, on an air inlet side of the slider, whereas a trailing ramp 8 is formed in the form of an inclined surface on the center rail 6 on an air outlet side thereof. Then, a portion of the yoke portion-forming part is cut off on each of opposite sides, leavings a core portion only. Thereby, a magnetic head slider 1 according to the present invention is obtained.

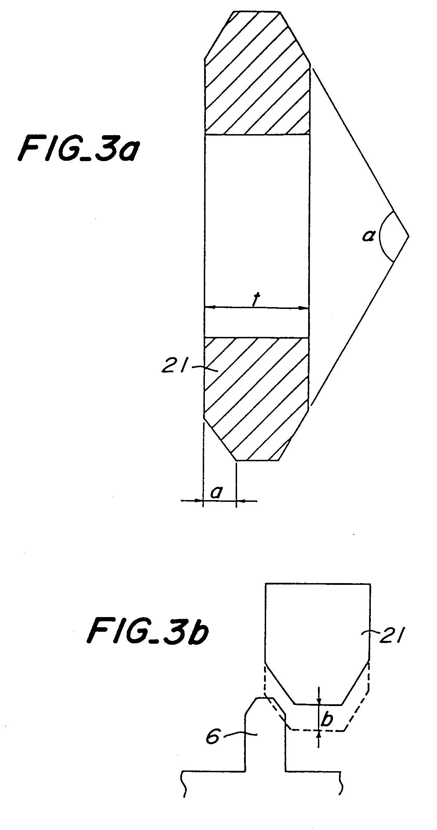

Figs. 3(a) and 3(b) are views for illustrating shape of the grinding stone to be used in the formation of the above-mentioned track side surfaces 12-1 and 12-2. The grinding stone 21 shown in Fig. 3(a) is made of diamond or the like, and a thickness "t" of 0.3 mm and a vertex angle "α" of the conical shape of 120° with a height of a grinding portion at its tip portion of 0.1 mm. A rotary shaft is fitted to a central hole of the grinding stone, and the grinding stone is rotated around the center shaft parallel to the flat surface of the center rail 6 to be opposed to a recording medium. As shown in Fig. 3(b), the track side surfaces 12-1 and 12-2 can be formed in the slider of the present invention by descending the grinding stone by a given distance, for example, 80 µm.

If the angle of the vertex of the conical peripheral surface of the grinding stone 21 at a hypothetical tip in Fig. 3(a) is less than 60°, an angle defined between the inclined surface on each of the opposite side sides of the track and the recording media is less than 30°. Consequently, a magnetic flux leaking from opposite sides of a track to which information is intended to be recorded may be superimposingly recorded on information recorded in a track adjacent the intended track. When information is reproduced, a signal in the track adjacent the intended one may be read out. Thus, the angle α is preferably not less than 60°. On the other hand, if the angle "α" of the vertex of the conical peripheral surface is more than 160°, the worked edge portions of the track are likely to be chipped. Therefore, the angle "α" of the vertex is preferably not more than 160°.

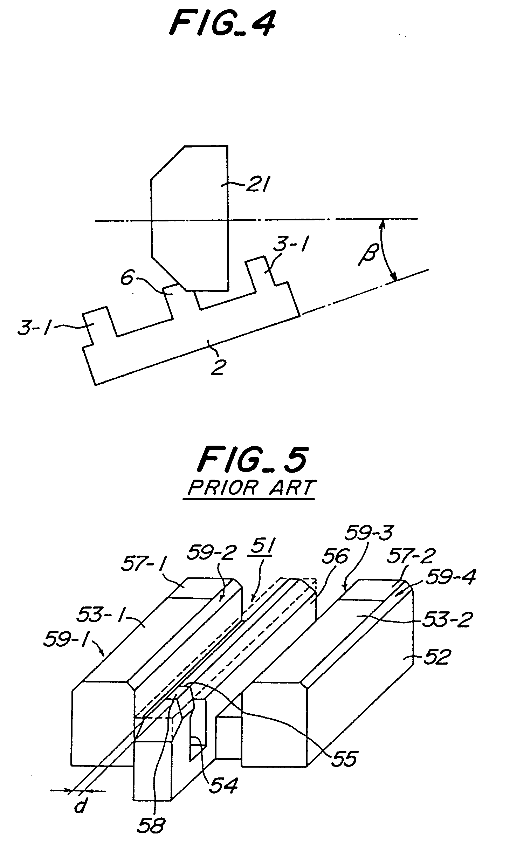

Furthermore, the slider body to be worked needs not necessarily be placed in parallel to the central shaft of the frust-conical grinding stone as shown in Fig. 4. The slider body may be inclined relative to the central shaft of the grinding stone at a given angle "β". This angle "β" may be set depending upon the angle of the vertex of the conical peripheral surface, the structure of the magnetic head, etc.

As having been explained above, according to the present invention, since the track portion is constituted by the flat surface of the center track to be opposed to the recording medium and the track side surfaces each having a shape formed by a part of a conical peripheral surface and defining the width of the track, the track portion can be formed only by machining the roughly ground track portion including the magnetic gap by means of the rotating conical grinding stone. As a result, the time required for working can be shortened, and the service life of the grinding stone can be prolonged. In addition, since the thus formed track portion of the magnetic head slider has the structure in which the magnetic gap is throttled relative to the magnetic gap in three-dimensional directions. Thus, the recording efficiency as well as the reproducing efficiency can be improved.

## Claims

1. A magnetic head slider comprising a track portion, said track portion being constituted by a flat surface to be opposed to a recording medium and two track side surfaces each having a convex conical peripheral shape and defining the width of the track portion as viewed on the above flat surface.

2. The magnetic head slider set forth in Claim 1, wherein said two track side surfaces are symmetrical with respect to a plane vertically passing a center line of a center rail of the magnetic head slider.

3. The magnetic head slider set forth in Claim 1 or 2 wherein a line drawn on the conical peripheral surface of each of the track side face of the track portion and passing a vertex of a conical shape constituting the conical peripheral surface forms an angle of 30°-80° between a center line of the conical shape.

4. A process for producing a magnetic head slider, comprising step of forming each of two track side surfaces by descending, relative to a track portion of a core portion of the magnetic head slider, a grinding stone having a conical or frusto-conical shape at a peripheral side while being rotated, said track side surfaces each having a conical peripheral shape and defining the width of the track as viewed on the above flat surface.

5. The producing process set forth in Claim 4, wherein the grinding stone is used, which has a conical peripheral surface corresponding to that of each of the track side faces of the track, and the conical peripheral surface of the grinding stone forms an angle of 30°-80° between a center line of the conical shape.

6. A magnetic head slider comprising:
(1) a slider body; and
(2) a yoke portion provided at one end of said slider body, wherein projections are provided on opposite sides of the slider body, respectively, an air-floating surface is formed on an upper portion of each of said projections, a central rail is provided in a central portion of an upper face of the slider body and an upper face of the yoke portion, a magnetic gap is formed between the slider body and yoke portion, a track portion is provided on the upper face of the central rail, and said track portion is constituted by by a flat surface to be opposed to a recording medium and two track side surfaces each having a convex conical peripheral shape and defining the width of the track portion as viewed on the above flat surface.

7. A process for producing a magnetic head slider, said process comprising:
(1) bonding a yoke portion-forming part to a slider body part;
(2) forming air bearing surface portions on opposite sides of upper faces of the thus bonded slider body part and yoke portion part;
(3) forming each of two track side surfaces by means of a grinding stone having a conical shape at a peripheral side while being rotated, the track side surface each having a conical peripheral shape and defining the width of the track as viewed on the above flat surface; and
(4) cutting off said yoke portion-forming part on opposite sides, while leaving a core portion to obtain said magnetic head slider.
